# EUROPEAN PATENT APPLICATION

(11) **EP 2 704 052 A1**
(43) Date of publication of application: **05.03.2014**
(21) Application number: 13181887.4
(22) Date of filing: 27.08.2013
(51) Int. Cl.: G06F 21/32

(54) **Transaction verification system**

(30) Priority: 28.08.2012 US 201261694078 P
(71) Applicant: Solink Corporation, Ottawa, ON K2K 0G7 (CA)
(72) Inventor: O'Reilly, John, Ottawa, Ontario K1G 6T3 (CA); Youmaran, Richard, Orleans, Ontario K4A 0S5 (CA); Paliga, Andrzej, Carp, Ontario L0A 1L0 (CA); Matta, Michael, Kanata, ON, K2K1L6 (CA); Waddington, Christopher, Ontario, P0A 1H0 (CA)
(74) Representative: Alton, Andrew

(57) **Abstract**

An analytics server for use in a transaction system with a terminal for performing authenticated user-initiated transactions and generating transaction data including a user identity associated with each transaction and a camera for capturing image data of a user performing an authenticated transaction at the terminal is configured to extract user characteristic features from the image data associated with authenticated transactions and iteratively update a user database of the user characteristic features over multiple authenticated transactions. The analytics server is further configured to compute a match score, based on preset rules, of the user characteristic features for a current transaction with the user characteristic features associated with a current user stored in the user database, and raise an alarm when the match score fails to meet a threshold value.

## Description

### FIELD OF THE INVENTION

This invention relates to facial recognition and more particularly to security, transaction verification, and financial transaction security at Automatic Teller Machines, Point-of-Sale devices and other customer terminals.

### BACKGROUND OF THE INVENTION

Historically, a typical point-of-sale (POS) or Automatic Teller Machine (ATM) transaction, the user after identifying themselves, for example through presentation of a card issued by their financial institution, is required to enter a personal identification number (PIN), which is a secret numeric password established between the user and the financial institutions system used to authenticate the user to the system. Typically, financial transaction systems (FTSs) within the prior art required the user to provide a non-confidential user identifier or token (the user ID), generally contained on the card inserted by the user, and a confidential PIN to gain access to the system. Upon receiving the user ID and PIN, the FTS looks up within its database the PIN based upon the user ID and compares the looked-up PIN with the received PIN. The user is granted access only when the number entered matches with the number stored in the system. Such PINs are most often used for ATMs and POS terminals with debit cards and credit cards. However, such systems are nevertheless subject to various kinds of fraud.

Today, short-range wireless and RF identity (RFID technologies have added "smart-tags," "touch-and-go" credit / debit cards, and smartphone solutions to these traditional POS and ATM physical card options. However, in most instances, the user for increased convenience will have opted to bypass the PIN provisioning as a separate step so that in fact a thief with one of these credential means can actually increase both their success rate in committing fraud and the rate at which they exploit the credential. In order to circumvent such fraud the FTSs operate a variety of fraud detection methods, the most common of which are based upon unusual expenditure patterns, e.g. a user lives in New York and the FTS system identifies that a purchase was made in San Diego or that multiple transactions are made at a single location within a short period of time. However, these fraud detection mechanisms only trigger after a fraud has been successfully performed or themselves are flawed.

Biometrics, namely the identification of humans by their characteristics or traits, which may include facial recognition, fingerprints, gait, voice, and retinal recognition, may improve the security of the financial services industry as they have been previously exploited in admission protocols for example. Improving security for the services industry saves financial institutions time and money both through a reduction of fraud cases but also through the administration expenses of dealing with forgotten passwords. The use of biometrics can also ensure that confidential information remains confidential while deterring identity theft, particularly as it relates to ATM terminals and card-not-present e-commerce transactions.

Beneficially facial recognition offers benefits over other biometrics including, but not limited to:
- non-intrusive and requires no direct physical interaction with the user thereby allowing passive identification;
- offers high accuracy and allows for automated / high enrollment and verification rates;
- does not require an expert to interpret the comparisons;
- can exploit existing ATM hardware infrastructure, existing cameras and image capture devices;
- supports POS, ATM and card-not-present e-commerce transactions; and
- existing images may be employed without having to re-enroll every user.

Facial recognition systems are biometric methods for automatically identifying or verifying a person from a digital image or a video frame from a camera or video source. Computerized facial recognition is based on capturing an image of a face, extracting features, comparing it to images in a database, and identifying matches. Images are converted into numbers representing the various features of a face. For example, an algorithm may analyze the relative position, size, and/or shape of the eyes, nose, cheekbones, and jaw. These features are then used to search for other images with matching features. Other algorithms normalize a gallery of face images and then compress the face data, only saving the data in the image that is useful for face detection. There are about 80 nodal points on human face including, but not limited to, the distance between eyes, the width of the nose, depth of eye sockets, cheekbones, jaw line, and chin. Of these approximately 80 nodal points only approximately 14-22 nodal points are needed to complete a recognition process.

Within the commercial arena several companies have established facial recognition products including CTrue, Firs, and Luxand for example. The "C-Entry" system by CTrue controls entry based on facial features. Prior to this the person must have their picture taken in a controlled environment and stored within a database. When approaching a door using the system within a controlled environment another picture is taken and compared with the stored picture. If a match is found, then the door is unlocked. In contrast Firs provides hardware platforms which address face capture in video surveillance systems. The "Face Capturer" from Firs is an intelligent face acquisition terminal for the automatic detection and capture of a face within video scenes. It is based on a Digital Signal Processing (DSP) platform wherein the terminal has one-way video input and exploits intelligent video analysis to capture and store faces.

Luxand in contrast provides a Software Development Kit to developers allowing them to include face-based user authentication, automatic face recognition, and identification into their Web-based and desktop applications. The resulting system can work with entire faces or only specific facial features and supports face recognition in still images and real-time video streams thereby allowing the creation of a wide range of applications from simple automatic red-eye removal tools to biometric login solutions.

Specifically for ATMs within the prior art United States Patent 7,522,750 by Chiang et al entitled "Biometrics Verification System and a Method thereof' describes a system comprising an application server which includes a Benefits Identification Card (BIC) reader module for reading source facial features from a BIC card and an authentication server that includes face detection, feature extraction and face feature matching modules for matching the target facial features with the source facial features transmitted via a secure channel service from the BIC card verification module and generating the matching result. Chiang teaches to the authentication server exploiting a series of modules including a detectability test module which selects an optimum image to retrieve target facial features from, a recognisability test component which selects an optimum target facial image from the target facial images to process; and a factuality test component where target facial images are tested by comparing variance among the target facial images. Core to the detectability test module is that the ATM, POS etc accessed by the user has multiple image acquisition devices, e.g. cameras, such that multiple views of the user are acquired and the detectability test module selects the image it considers optimum for subsequent processing.

However, if we consider an existing ATM, also known as an automated banking machine (ABM) or Cash Machine, then these have a single camera and the characteristics of the cameras and the type of camera will vary according to the supplier of the ATMs to any particular institution. However, through partnership agreements for debit transactions, e.g. Cirrus, The Exchange, etc a user may have access to over a million (1,000,000) ATMs globally from multiple manufacturers. If we then add POS locations then in the United States alone there are over ten million (10,000,000) terminals alone handling over twenty billion (20,000,000,000) transactions annually. Even considering just ATMs there are different types of cameras used at ATM locations for security purposes. One type is expensive, and does video analytics itself, or is combined with an expensive encoder attached to the camera. The embedded video analytics automatically monitor the video watching for motion detection, object recognition, and many other security threats. The other type of camera is much less expensive and just takes video, from which images can be extracted from every set time period or in dependence upon a trigger such as the customer pressing a specific key on the ATM. In both cases, these cameras run continuously, and the images are not of great quality. Also the captured image and video data from the cameras is generally only used once a fraud is suspected or confirmed.

Accordingly, such a system as taught by Chiang whilst being considered for ATM applications it is primarily suitable for an office environment, where a limited number of employees need to have access to the premises and it is feasible to store a good quality image of the employee taken under controlled circumstances, and while face recognition used in a association a PIN would decrease the likelihood of fraud for ATM machines, the system has significant disadvantages in that it requires new equipment to be installed at every ATM machine, it requires every customer to have a good picture of themselves taken and stored somewhere that could be retrieved and analyzed every time they wanted to do a transaction, requires that these pictures are updated as the customer changes aspects of their appearance, and does not factor in highly variable lighting, highly variable backgrounds, dirty and / or scratched protective covers to the cameras, etc. When such a system is difficult to consider in a relatively controlled environment where the user is standing in front of a large fixed ATM then extending such a system to POS becomes extremely problematic.

Accordingly, within real world applications facial recognition is hard to do under a range of variable conditions, including, but not limited to, greater than 20 degrees towards profile, poor lighting, sunglasses, hair styles and colour, facial hair, background, objects partially covering the subject's face, low resolution images, and varied facial expressions. Additionally, existing face matching and recognition algorithms such as those described supra are computationally expensive to run on the limited hardware of typical video analytic cameras, or require higher quality images than available from general video surveillance cameras such as would be deployed in generalized POS applications.

Additional references addressing aspect of ATM fraud, facial recognition, and biometric recognition include, for example McGlasson in "ATM Fraud: 7 Growing Threats to Financial Institutions" (Bank Info Security, June 8 2009, http://www.bankinfosecurity.com/articles.php?art_id=1523); Qian et al in "Face Recognition based on Local Feature Analysis" (Int. Symp. Comp. Sci. and Computational Tech., Vol. 2, pp. 264-267, 2008); and Jiao et al in "A Face Recognition Method based on Local Feature Analysis" (Proc. 5th Asian Conf. on Computer Vision, 2002); Kare et al in "Using Bi-Dimensional Regression to Assess Face Similarity" (Machine Vision and App., Vol.21, No.3, pp.261-274); and Maltoni et al "Handbook of Fingerprint Recognition" (2nd Ed., Springer, 2009).

Accordingly, it would be beneficial for financial institutions, as well as others exploiting facial recognition techniques for applications such as access control, security, etc had access to a system that automatically processed image data obtained from image sources associated with multiple authenticated transactions by an individual in order to extract user characteristic features from this set of image data associated with authenticated transactions and iteratively updated user data, for example within a user database, based upon these extracted user characteristic features associated with the multiple authenticated transactions. It would be further beneficial for additional processing to allow analytics to be performed to compute a match score, based upon preset rules, of the user characteristic features for a current transaction being performed. Failure of a match score to meet a predetermined condition may for example result in the transaction being flagged as suspect or stopped altogether.

It would be further beneficial if such facial recognition techniques allowed multiple users to be associated with a debit card / credit card either automatically or at the direction of the first user associated with it. It would be evident that such facial recognition techniques would allow for preemptive action(s) to be performed as a result of a transaction being initiated or completed. Beneficially, embodiments of the invention further support the provisioning of such security and fraud detection techniques to new evolving POS solutions, such as Square™ and ROAM card swipers which connect directly to a smartphone or card.io card scanning, as well as online purchasing performed by a user at home etc.

Other aspects and features of the present invention will become apparent to those ordinarily skilled in the art upon review of the following description of specific embodiments of the invention in conjunction with the accompanying figures.

### SUMMARY OF THE INVENTION

It is an object of the present invention to mitigate limitations within the prior art relating to facial recognition and more particularly to security, transaction verification, and financial transaction security at Automatic Teller Machines, Point-of-Sale devices and other customer terminals.

In accordance with an aspect of the invention there is provided a system comprising: a terminal for performing authenticated user-initiated transactions and generating transaction data including a user identity associated with each transaction; a camera for capturing image data of a user performing an authenticated transaction at the terminal; an analytics server for processing image data from the camera, the analytics server being configured to extract user characteristic features from the image data associated with authenticated transactions and iteratively update a user database of the user characteristic features over multiple authenticated transactions, and wherein the analytics server is further configured to compute a match score, based on preset rules, of the user characteristic features for a current transaction with the user characteristic features associated with a current user stored in the user database, and raise an alarm when the match score fails to meet a threshold value.

In accordance with an aspect of the invention there is provided a device, the device comprising: a terminal for performing authenticated user-initiated transactions and generating transaction data including a user identity associated with each transaction; and a camera for capturing image data of a user performing an authenticated transaction at the terminal; wherein the analytics server is configured to extract user characteristic features from the image data associated with authenticated transactions and iteratively update a user database of the user characteristic features over multiple authenticated transactions, and wherein the analytics server is further configured to compute a match score, based on preset rules, of the user characteristic features for a current transaction with the user characteristic features associated with a current user stored in the user database, and raise an alarm when the match score fails to meet a threshold value.

In accordance with an aspect of the invention there is provided a method comprising: generating transaction data including a user identity in response to an authenticated transaction performed by a user; capturing image data of a user performing an authenticated transaction at the terminal; and processing image data from the camera to extract user characteristic features from the image data associated with authenticated transactions; iteratively updating a user database of the user characteristic features over multiple authenticated transactions; computing a match score, based on preset rules, of the user characteristic features for a current transaction with the user characteristic features associated with a current user stored in the user database, and raising an alarm when the match score fails to meet a threshold value.

An aspect of the invention provides a system comprising: an analytics server for connecting to a network comprising at least a processing circuit, the analytics server being configured to: receive image data from a camera connected to the network for capturing image data of a user performing an authenticated transaction at a terminal also connected to the network; receive transaction data from the terminal, the transaction data including a user identity generated in association with the authenticated user-initiated transaction performed by a current user; extract user characteristic features from the image data associated with authenticated transactions; iteratively update a user database of the user characteristic features over multiple authenticated transactions; compute with the processing circuit a match score based upon preset rules for the user characteristic features relating to a current user performing a current transaction with the user characteristic features associated with an authenticated user, the authenticated user being established in dependence upon the user identity; and determining whether to raise an alarm when the match score fails to meet a threshold value.

An aspect of the invention provides a method comprising associating with a financial instrument a set of user characteristic features, the set of user characteristic features forming part of a user database stored within a non-volatile non-transitory physical memory and derived by extracting user characteristic features from image data captured in association with a plurality of authenticated user-initiated transactions employing the financial instrument, wherein the user database is iteratively updated with the user characteristic features over multiple authenticated transactions.

An aspect of the invention provides a method comprising determining whether to authorize release of at least one of financial funds with and data relating to a financial instrument in dependence upon at least whether a match score meets a threshold value, the match score being established by applying with a processing circuit preset rules to user characteristic features relating to a current user performing a current financial transaction in respect of the release of financial funds in relation to the financial instrument with user characteristic features associated with an authenticated user of the financial instrument; wherein the user characteristic features of the authenticated user have been established by extracting user characteristic features from image data associated with a plurality of previous authenticated transactions and iteratively updating a user database of the user characteristic features over the plurality of previous authenticated transactions.

An aspect of the invention provides a method comprising determining whether to generate at least one notification of a plurality of notifications, each notification being generated upon whether a match score exceeds a predetermined threshold value associated with the notification, wherein the match score is established by applying with a processing circuit preset rules to user characteristic features relating to a current user performing a current financial transaction relating to a financial instrument with user characteristic features associated with an authenticated user of the financial instrument and the user characteristic features of the authenticated user have been established by extracting user characteristic features from image data associated with a plurality of previous authenticated transactions and iteratively updating a user database of the user characteristic features over the plurality of previous authenticated transactions.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:

Figure 1 is a block diagram of a transaction verification system implemented as a cloud service according to an embodiment of the invention;

Figure 2 is a block diagram of a passive analytics server according to an embodiment of the invention;

Figure 3 shows the analytics engine according to an embodiment of the invention in more detail;

Figure 4 shows the color and texture extraction module according to an embodiment of the invention in more detail; and

Figure 5 shows the local facial feature extraction module according to an embodiment of the invention in more detail.

### DETAILED DESCRIPTION

The present invention is directed to facial recognition and more particularly to security, transaction verification, and financial transaction security at Automatic Teller Machines, Point-of-Sale devices and other customer terminals.

The ensuing description provides exemplary embodiment(s) only, and is not intended to limit the scope, applicability or configuration of the disclosure. Rather, the ensuing description of the exemplary embodiment(s) will provide those skilled in the art with an enabling description for implementing an exemplary embodiment. It being understood that various changes may be made in the function and arrangement of elements without departing from the scope as set forth in the appended claims.

A "portable electronic device" (PED) as used herein and throughout this disclosure, refers to a wireless device used for communications and other applications that requires a battery or other independent form of energy for power. This includes devices, but is not limited to, such as a cellular telephone, smartphone, personal digital assistant (PDA), portable computer, pager, portable multimedia player, portable gaming console, laptop computer, tablet computer, and an electronic reader.

A "fixed electronic device" (FED) as used herein and throughout this disclosure, refers to a wireless and /or wired device used for communications and other applications that requires connection to a fixed interface to obtain power. This includes, but is not limited to, a laptop computer, a personal computer, a computer server, a kiosk, a gaming console, a digital set-top box, an analog set-top box, an Internet enabled appliance, an Internet enabled television, and a multimedia player.

A "terminal" as used herein and throughout this disclosure, refers to a system that a user employs to provide authorization relating to a past, current, or future supply of a product, ware, service, goods etc. This includes, but is not limited to, a kiosk, a computer kiosk, a podium, an ATM, an ABM, a vending machine, a POS system, a podium, a PED, a FED, and an electronic device.

A "financial instrument" or "credential" as used herein and throughout this disclosure, refers to a financial device that a user maintains which identifies financial information about the user such as financial service provider and financial account details. This includes, but is not limited to a credit card, a debit card, a prepaid credit card, a gift card, a smart-tag, and a software application.

Typically, there are considered to be five steps within facial recognition systems. The first step is sample capture wherein a system is attached to a surveillance system, a software recognition suite searches the field of view of the surveillance system, e.g. a video camera, digital image camera, etc. for faces, and if there is a face in the view, it is detected wherein a multi-scale algorithm is then employed to search for faces in low resolution after which the system switches to a high-resolution search only after a head-like shape is detected. In the second step, alignment, a face is detected and the system determines the head's position, size and pose. Within the prior art a face needs to be turned at least 35 degrees toward the camera for the system to register it.

In the third step, normalization, the image of the head is digitally manipulated, i.e. scaled and rotated, so that it can be registered and mapped into an appropriate size and pose. Subsequently, in the fourth step, representation, the facial recognition system translates the facial data into a unique code also called a template, which allows for easier comparison of the newly acquired facial data to stored facial data. Generally, the template is much smaller than the image from which it is drawn. Then, in the fifth step, matching, the newly acquired facial data is compared to the stored data such as through 1:N matching wherein a search for a match to a face is achieved through looking at all faces in the database and a list is created with scores / hits leading generally to one of two main outcomes, either the confirmation of someone's identity or the identification of a person.

Recognition algorithms can be divided into two main approaches, geometric, which look at distinguishing features, or photometric, which is a statistical approach that distills an image into values and compares the values with templates to eliminate variances. Common recognition algorithms include Principal Component Analysis (PCA) using eigenfaces, Linear Discriminate Analysis, Elastic Bunch Graph Matching using the Fisherface algorithm, the Hidden Markov model, and the neuronal motivated dynamic link matching. Such prior art methods are two-dimensional (2D) in that they use a flat image of a face. However, three-dimensional (3D) methods are also available wherein the main difference is the use of the shape of the face, to add information to a final template. The first step in a 3D analysis is typically the generation of a virtual mesh reflecting a person's facial shape. This can be achieved, for example, by using a near-infrared light to scan a person's face and repeating the process a couple of times. The nodal points are located on the mesh, generating thousands of reference points rather than the typical 20 to 30 used by 2D methods. Whilst this makes the 3D methods more accurate, it also makes them more invasive and more expensive. As a result, 2D methods are the most commonly used.

None of the current algorithms is 100% correct. The best verification rates are typically about 90% correct. The quality of the computer recognition system is dependent on the quality of the image and mathematical algorithms used to convert a picture into numbers. The most common reasons for the recognition failures include, but are not limited to, lighting, facial expressions, hairstyles, hair color, facial hair, background, and position of the head. The most challenging application is the ability to use images captured by surveillance cameras which may be subject to substantial variations. In many cases the subject in those images is moving, may be wearing a hat, scarf, sunglasses, etc whilst the light and the position of the head are not optimal. These issues are particularly prevalent in an application such as an ATM where the user is engaging a touchscreen or keyboard for example and may be within a visually noisy environment and moving their head constantly. Other important variables may include, varying resolution at which image is taken and the camera angle particularly where there is no fixed or constant relationship between the user at the POS, ATM, etc, and the camera. Accordingly, defects may exist in many of the steps, for example normalization, might not be effective, particularly where the incoming image is of poor quality.

Human faces can be characterized both on the basis of local as well as of global features. Global features are easier to capture but whilst they are less discriminative than localized features they are also less sensitive to localized changes in the face due to the partial deformability of the facial structure. Local features on the face can be highly discriminative, but may suffer for local changes in the facial appearance, partial face occlusion, etc. Techniques for facial feature extraction include, but are not limited, to:
- geometry-based, wherein features are extracted using geometric information such as relative positions and sizes of the face components;
- template-based, wherein a match for facial components to previously designed templates is sought;
- colour segmentation-based, using skin colour to isolate the face and any non-skin colour region within the face is viewed as a candidate, such as for example the eyes and mouth;
- appearance-based, where any extracted characteristic from the image is referred to a feature.

Amongst the steps in many facial recognition systems are foreground and background extraction. Typically, background modeling is performed by Gaussian mixtures using a pixel based process. If *x* is a random process representing the value of a given pixel with time, then a convenient framework to model the probability density function of *x* is the parametric Gaussian mixture model where the density is composed of a sum of Gaussians. Accordingly, a background may be removed from an image or series of images by using such a sum of Gaussians to derive a background correction.

In the former extraction, for a given frame sequence from a camera, all foreground objects are detected. Amongst, the algorithms for this are Gaussian and watershed-based segmentation wherein a grey-level image may be seen as a topographic relief map, where the grey level of a pixel is interpreted as its altitude in the relief. A drop of water falling on a topographic relief flows along a path to finally reach a local minimum. Intuitively, the watershed of a relief corresponds to the limits of the adjacent catchment basins of the drops of water. In image processing, different watershed lines may be computed and graphically some may be defined on the nodes, on the edges, or hybrid lines on both nodes and edges. Watersheds may also be defined in the continuous domain. There are also many different algorithms to compute watersheds. For a segmentation purpose, the length of the gradient is interpreted as elevation information. Different approaches may be employed to use the watershed principle for image segmentation including, but not limited to:
- exploiting local minima of the gradient of the image may be chosen as markers, in this case an over-segmentation is produced and a second step involves region merging; and
- marker based watershed transformations which make use of specific marker positions which have been either explicitly defined by the user or determined automatically with morphological operators or other ways.

Within image processing a variety of algorithms may be exploited, either individually or collectively, to correct, minimize, adjust, or manipulate an aspect of the image or images being processed. Examples, of such algorithms include, but are not limited to, Local Binary Pattern (LBP), Gabor filters, CIELAB opponent colour spaces, Haar objects, Logarithmic Image Processing (LIP), and similarity invariant image representations and comparisons (SIIRC). These examples are briefly described below.

LBP is a simple efficient texture operator which labels the pixels of an image by thresholding the neighborhood of each pixel and considering the result as a binary number. Beneficially, LBP provides robustness to monotonic gray-scale changes which are caused, for example, by illumination variations whilst its computational simplicity allows images to be analyzed in challenging real-time settings.

In image processing, a Gabor filter is a linear filter used for edge detection and typically employed to allow local frequency information to be extracted from an image. Unlike Fourier analysis that determines a global frequency domain representation of the entire image, Gabor filters estimate the strength of certain frequency bands and orientations at each location in the image, giving a result in the spatial domain. A Gabor wavelet is a complex planar wave restricted by a two-dimensional Gaussian envelope. Aside from scale and orientation, the only thing that can make two Gabor wavelets differ is the ratio between wavelength and the width of the Gaussian envelope. Every Gabor wavelet has a certain wavelength and orientation, and can be convolved with an image to estimate the magnitude of local frequencies of that approximate wavelength and orientation in the image.

CIELAB is an example of an opponent colour space, in which the axes have at either end a pair of colors which cannot simultaneously appear in a colour stimulus. It is also an Adams chromatic value colour space, in that those cone fundamentals, or approximations thereof, are non-linearly transformed so that gray stimuli approximately track the Munsell value (lightness) scale. One of the axes has white at one end and black at the other. Another axis has a magenta-red at one end and a green at the other. The third axis is slightly orange-yellow at one end and blue at the other. The axes are orthogonal, or perpendicular.

Haar-like features are digital image features used in object recognition. A Haar-like feature considers adjacent rectangular regions at a specific location in a detection window, sums up the pixel intensities in each region and calculates the difference between these sums. This difference is then used to categorize subsections of an image.

The Logarithmic Image Processing (LIP) model provides a nonlinear framework for visualizing images using a mathematically rigorous arithmetical structure specifically designed for image manipulation. The LIP model views images in terms of their graytone functions, which are interpreted as absorption filters. It processes graytone functions using arithmetic which replaces standard arithmetical operators. The resulting set of arithmetic operators can be used to process images based on a physically relevant image formation model.

SURF (Speeded-Up Robust Features) is a fast and robust algorithm for local, similarity invariant image representation and comparison. SURF selects interest points of an image from the salient features of its linear scale-space, and then builds local features based on the image gradient distribution. The main interest of the SURF approach lies in its fast computation of approximate differential operators in the scale-space, based on Integral Image Representation and Box Filters, enabling real-time applications such as tracking and object recognition.

A support vector machine (SVM) is a concept in statistics and computer science for a set of related supervised learning methods that analyze data and recognize patterns, used for classification and regression analysis. The standard SVM takes a set of input data and predicts, for each given input, which of two possible classes forms the input, making the SVM a non-probabilistic binary linear classifier. Given a set of training examples, each marked as belonging to one of two categories, an SVM training algorithm builds a model that assigns new examples into one category or the other. An SVM model is a representation of the examples as points in space, mapped so that the examples of the separate categories are divided by a clear gap that is as wide as possible. New examples are then mapped into that same space and predicted to belong to a category based on which side of the gap they fall on.

Principal component analysis (PCA) is a mathematical procedure that uses an orthogonal transformation to convert a set of observations of possibly correlated variables into a set of values of linearly uncorrelated variables called principal components. The number of principal components is less than or equal to the number of original variables.

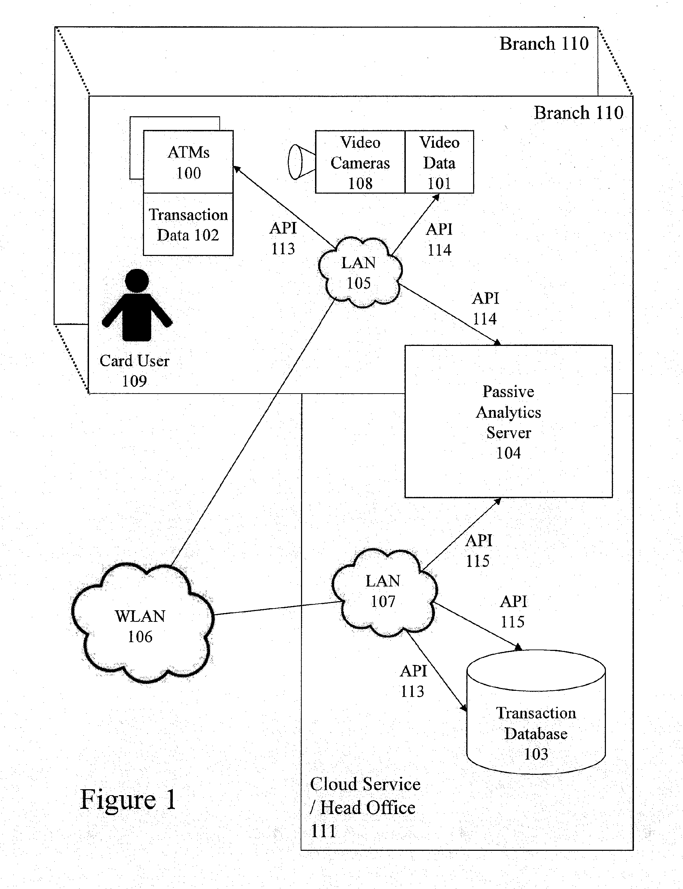

Referring to Figure 1, there is depicted a distributed financial system employing facial recognition according to an embodiment of the invention. Depicted are a plurality of Branch Offices 110 within which there are one or more ATMs 100. Each ATM 100 stores Transaction Data 102 every time a Card User 109 inserts their card and performs a transaction. Included within this Transaction Data is the identity (ID) of the person and the start and end time that the transaction took place. This Transaction Data 102 is accessible through an API 113 over the LAN 105. Associated with each ATM 100 there may be one or more Video Cameras 108 set up to record video of the Card User 109 as they use the ATM 100. These Video Cameras 108 store the video as Video Data 101, which is accessible through an API 114 over the LAN 105. The LAN 105 is connected to the WAN 106 by standard means. In a Cloud Service/ Head Office 111, there is a Transaction Database 103 which collects all the data using the LAN 107 and the WAN 106 from each Transaction Data 102 at each ATM 100 in each Branch Office 110 using API 113.

Also depicted is a Passive Analytics Server 104 which can reside either in a Branch Office 110, or in a Cloud Service/Head Office 111. The Passive Analytics Server 104 uses API 114 to access Video Data 101 and API 115 to access the Transaction Database 103. If background analytics are required, the Passive Analytics Server 104 can reside outside the Branch Office 110, and raise alarms for possible fraud in the background. If real-time analysis is required, then the Passive Analytics Server 104 may reside at the Branch Office 110, or at another local / regional location to cut down on time. For example, a Passive Analytics Server 104 may be associated with a fixed number of Branch Offices 110 of a particular bank, e.g. HSBC or Bank of America, or an area such as for example Arlington, Virginia. Likewise, Passive Analytics Servers 104 may be associated with specific financial providers and / or financial instruments as well as specific retailers or service providers, for example.

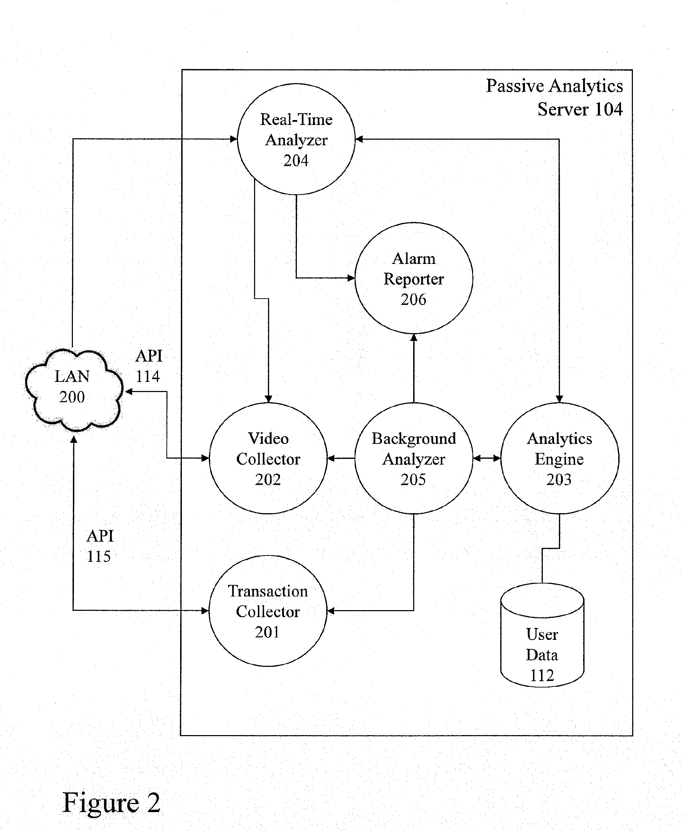

Referring to Figure 2, the configuration of a Passive Analytics Server 104 according to an embodiment of the invention is presented. Within Passive Analytics Server 104 there is a Video Collector 202, which uses API 114 to collect specific video from Video Data 101 based on time and duration. A Transaction Collector 201 uses API 115 to collect transactions from the Transaction Database 103. An Analytics Engine 203 is responsible for two functions; firstly taking a video stream, extracting facial features from it and storing the facial features against a particular user as User Data 112, and secondly taking a video stream, extracting facial features from it and matching it to stored User Data 112 and sending a negative response if one feature does not match

If transactions are to be analyzed in real time, then the Real Time Analyzer 204 is used. When a transaction starts at an ATM 100, then the Real Time Analyzer 204 is kicked in, by sending it the transaction data. It then asks the Video Collector 202 to collect current video from the corresponding Video Cameras 108 as Video Data 101. It then passes the video and transaction data into the Analytics Engine 203, which performs the analysis, stores new data about the facial features of Card User 109 and passes back either a positive or negative result on the match of the Card User 109 and the stored data on that Card User 109. If there is a negative response, then the Real Time Analyzer 204 sends an alarm to the Alarm Reporter 206 which handles the alarm situation. This is typically done with the Passive Analytics Server 104 residing at the Branch Office 110.

Transactions can also be analyzed in the background. In this case, the Passive Analytics Server 104 can reside outside the Branch Office 110 in the Cloud/Head Office 111 or elsewhere. The Background Analyzer 205 can work off a timer or another trigger, which uses the Transaction Collector 201 to retrieve a certain number of transactions using API 115 from the Transaction Database 103. Using these transactions, and the start and stop time, and location, it asks the Video Collector 202 to retrieve the correct video stream from the Video Data 101 using API 114. Once it has this it passes the video and transaction data into the Analytics Engine 203, which does the analysis, stores new data about the Card User's 109 facial features and passes back either a positive or negative result on the match of the Card User 109 and the previously stored data on that user. If there is a negative response, then the Background Analyzer 205 sends an alarm to the Alarm Reporter 206 which handles the alarm situation.

In real-time analysis the Alarm Reporter 206 may be linked back to the ATM 100 or other terminal providing video and transaction data, to enable or disable the transaction. For example, a cash withdrawal at an ATM 100 may proceed only upon receipt at the ATM 100 of an approved signal from the Passive Analytics Server 104. In other embodiments of the invention the Alarm Reporter 206 may have multiple trigger levels and determination processes such as approving / cancelling a transaction as discussed supra or authorizing a transaction but communicating an alarm to a PED associated with the Card User 109 retrieved from the User Data 112 or another database relating to Card Users 109 in order to receive verbal or PIN verification that it is the Card User 109 making the transaction. Alternatively, an alarm may trigger notification to an authority, regulator, security provider, bank security, or the police together with image data relating to the individual undertaking the transaction.

Within other embodiments of the invention multiple trigger levels may be associated with multiple alarms and actions. Optionally, the facial recognition processes described above may be executed upon an additional database may be established by the retailer, financial instrument provider and / or financial service provider wherein this additional database relates to known fraudsters who have been subject of previous fraudulent activity and have characteristic user features established within the database from this prior activity. Accordingly, a trigger of failure to establish a match between the current user presenting the user authentication information with the owner of the financial instrument triggering the transaction may initiate a subsequent analysis of this second database to see whether the current user is a known fraudster. In other embodiments of the invention this second database process may be employed prior to any financial instrument presentation based upon image capturing triggered due to another aspect of user engagement with the terminal, e.g. their facial image now meets a trigger establishing them as facing and in close proximity to the terminal.

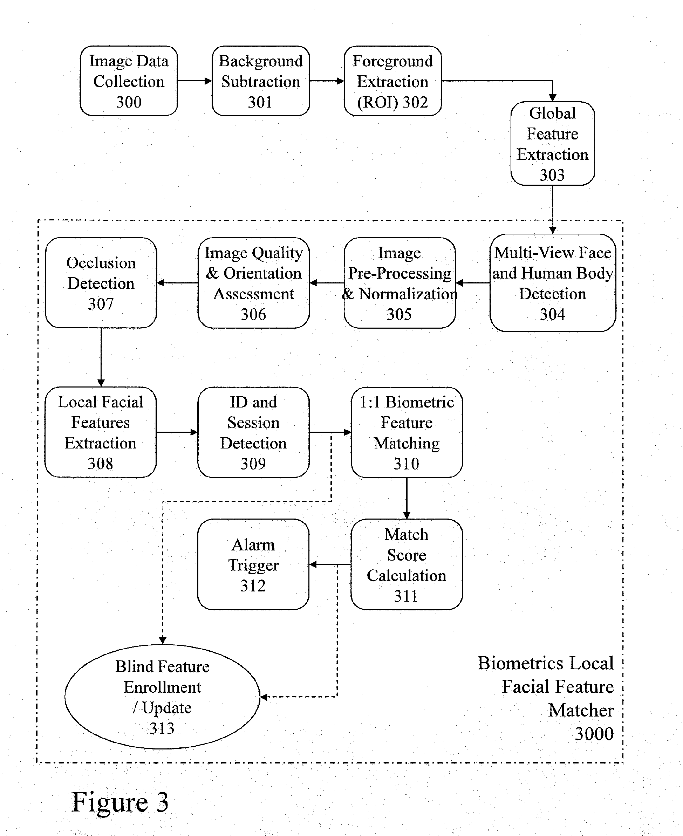

Now referring to Figure 3 there are depicted the steps involved in the Analytics Engine 203 according to an embodiment of the invention. Within the steps described below several stages exploit image processing which as described *supra* may exploit a variety of algorithms, either individually or collectively, to correct, minimize, adjust, or manipulate an aspect of the image or images acquired. Examples of such algorithms have been described *supra* but others known within the art may be exploited. Similarly others steps may be implemented using one or more techniques known within the art.

*Step 300: ImagelData Collection*: Video frames/images are extracted for further processing.

*Step 301: Background Subtraction*: Background adaptive modeling techniques are used to extract foreground objects in a scene. A combination of mixture of Gaussians and watershed-based segmentation algorithms may for example be used to model the background and extract desired information. Morphological operators may be for blobs and noise reduction.

*Step 302: Foreground Extraction*: A Region of interest (ROI), that which is leftover from 301 is used for further processing to remove foreground elements.

*Step 303: Global Feature Extraction*: wherein shape, position, color, texture and contours are extracted. Gabor, local binary pattern and RGB/CIELAB color conversion schemes may, for example, be used. Color-texture based feature matching algorithms may be used to associate extracted frames and / or images with an individual or set of individuals before face detection is performed. This step means that each bundle of collected images correspond to the appropriate individual or individuals under investigation.

*Step 304: Multi-view Face and Human Body Detection:* a cascade of orientated filters may be used as the main classifier to locate faces, upper body and lower body segments in the image and account for slight in-plane/out-of-plane rotation. Further minimal occlusion may be established using rectangular and histogram of gradients features. Support Vector Machine and Adaboost algorithms may for example be used for target classification. In instances where face detection fails, the process may proceed with an alternate sequence of body detection, approximate face location, and face contour extraction using Hough transform and curve fitting techniques for example.

*Step 305: Image Pre-processing and Normalization*: one or more image processing and enhancement techniques may be implemented for edge enhancement, contrast enhancement, image equalization and noise reduction. One such technique being LIP for example.

*Step 306: Image Quality and Orientation Assessment*: for under-exposed, overexposed, noisy images, blurry images or those with spherical aberration then the distortion may be reduced using appropriate filter techniques and / or lighting correction schemes.

*Step 307: Occlusion Detection:* If the user's face is occluded then the process might proceed with global face feature extraction. In this global features are located and dominant key point features on or within the ROI are extracted. Optionally, there color texture encoded information processing may be employed, such as with SURF or SURF-like processes.

*Step 308: Local Facial Feature Extraction*: wherein the process detects, locates and extracts nose, eyes, mouth, chin and ear feature points. Local facial features may be extracted using a system comprised of a combination of optimized rectangular filters, for example, discretely or in conjunction with a classifier, such as an Adaboost classifier. Where a classifier is employed, the system is trained on a set of positive and negative images.

*Step 309: ID and Session Detection*: For newly registered IDs, the process creates the first feature vector in the system (no matching required). For subsequent occurrences the previously stored feature vectors for this ID are retrieved. Optionally, feature vectors may also be blindly collected using this method.

*Step 310: 1:1 Biometric Feature Matching*: wherein for example a wavelet based feature extraction process may be employed and SURF-like algorithms employed for matching individual facial features to a pre-enrolled feature set. Further, embodiments of the invention may exploit multiple images from the dataset corresponding to that specific individual to perform the matching and the output results combined to obtain a final matching score, average score with standard deviation, etc.

*Step 311: Match Score Calculation*: calculation of the match between current user images and stored user characteristics may be performed using one or more different distance metrics, for example Euclidian and / or Malahanobis distance. Alternatively, a brute force match score calculation may be employed as well as matching feature vectors and classifying output into different categories using pre-selected attributes. Examples of such algorithms include SVM and Logistic Regression.

*Step 312: Alarm Trigger*: wherein, based on a predetermined set of rules, if a feature does not match to a predetermined score or scores, an alarm or a set of alarms may be triggered. For example, two facial feature vectors taken from same ID may be uncorrelated at that specific time of a financial transaction and hence the transaction blocked, whilst another time they may match to a predetermined level wherein an indication of an authorized activity is generated.

*Step 313: Blind Feature Enrollment*/*Update*: wherein using extracted feature vectors updates may be made to the most dominant and occurring feature points for the registered ID for subsequent use in other transaction authorizations. In some embodiments a predetermined number of dominant features with high confidence values may be kept and updated in time whilst in others all those exceeding a predetermined confidence may be kept / updated or even all kept. Accordingly, with time a dominant feature may be added or removed to those associated with the user ID. For example, a user may grow a moustache, shave a beard, change their glasses, change their hairstyle, change their hair color, add a piercing, etc.

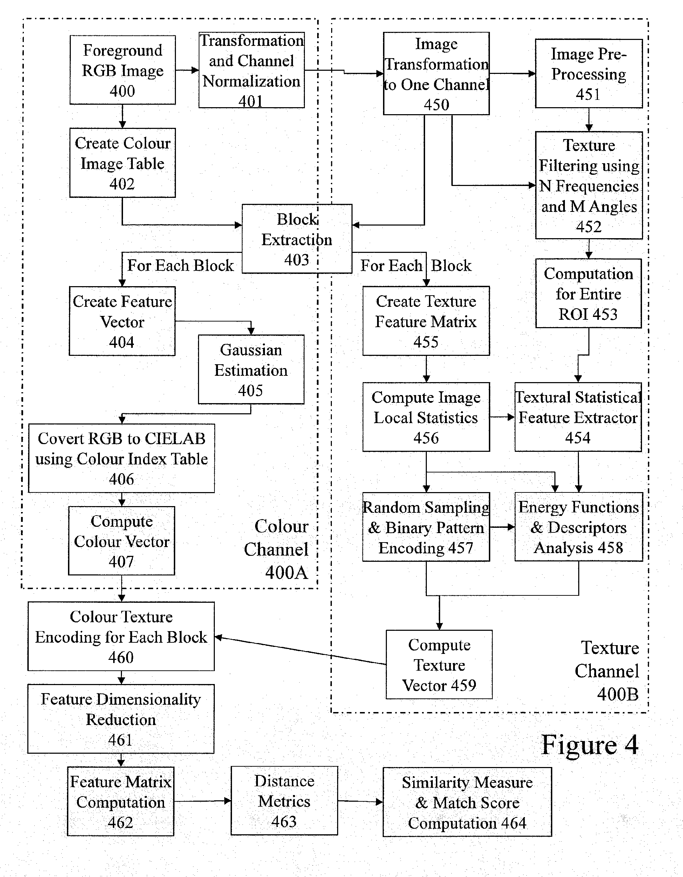

Now referring to Figure 4 there is depicted a schematic depicting Step 303 from Figure 3 for the Colour and Texture extraction according to an embodiment of the invention. Within the steps described below several stages exploit image processing which as described *supra* may exploit a variety of algorithms, either individually or collectively, to correct, minimize, adjust, or manipulate an aspect of the image or images acquired. Some examples of such algorithms have been described *supra* but others known within the art may be exploited. Similarly others steps may be implemented using one or more techniques known within the art. As depicted the steps are:

*Step 400: Foreground RGB Image*: The RGB data (3-channels) obtained after background subtraction is processed. The foreground extraction techniques, may for example, use a combination of Gaussian and watershed-based segmentation algorithms to extract the mask or it may exploit one or other or another process. Typically, morphological operators are used for processing blobs within the image and image noise reduction.

*Step 401: Color Space Transformation and Image Channel Normalization:* Simple or complex color channels operations may be applied to one or more colour channels in order to improve the performance of texture-based algorithm by making them less sensitive to change in illumination.

*Step 402: Creation of the Color Index Table (CIT):* A CIT may be created using 11 main colors, namely {black, gray, white, red, orange, yellow, blue, green, purple, pink and brown} or alternatively other standard and custom CITs may be created according to one or more factors, including but not limited to, the video data, the processing complexity, processing time limit (for example real time processing may exploit reduced complexity CIT tables versus offline processing) etc.

*Step 403: Image Block Extraction*: wherein the image is processed to generate a plurality of *N* × *N* pixel sub-blocks to analyze the image content. For example *N* = 5.

*Step 404: Create Feature Vector:* An image block discretely or combinations of image blocks extracted in Step 403 are re-organized such that the image pixel values and channels are in a vector format for example.

*Step 405: Gaussian Estimation:* Block estimation and quantization using Gaussian estimation is performed. Each block's statistical parameters are estimated using a Gaussian model. Block parameters are computed for entire image with a block size of *N* × *N.* Other estimation protocols may be employed rather than Gaussian estimations.

*Step 406: Color Space Conversion*: The color space is converted in this step from RGB to CIELAB with color quantization using CIT. The CIELAB color space is implemented since this color space is more uniformly perceived and hence makes the resulting Euclidean distance computations more efficient.

*Step 407: Compute Colour Vector*: The image unique color vector for the 11 most dominant local colors or the number employed in the creation of the Colour Index Table.

*Step 450: One Channel Image Transformation:* A 3-channel image conversion to a single channel is performed using one or more different image transformation techniques. This resulting single channel is passed to Step 403 Block Extraction and is also passed to Step 451 Image Pre-Processing and Step 452 Texture Filtering.

*Step 451: Image Pre-Processing:* The image received from Step 450 after conversion to a single channel is processed.

*Step 452: Texture Filtering*: wherein the image is processed, for example using for example Gabor wavelets using *N* central frequencies and *M* different angles, using the inputs from both Step 450 and Step 451.

*Step 453: Computation for Entire Region*: The entire Region of Interest (ROI) of the image is processed using for example Gabor feature vectors and image statistics.

*Step 454: Texture Statistical Feature Extractor:* In this step one or more different methods, e.g. Homogeneity, Entropy, Correlation, Contrast, are applied to the image using the input from Steps 453 and 456.

*Step 455: Create Texture Feature Matrix:* For each *N* × *N* block a Texture Feature Matrix is created using for example local Gabor feature extraction.

*Step 456: Compute Image Local Statistics:* Each image *N* × *N* sub-block is characterised by its local statistical characteristics hence making texture extraction and corresponding features more robust to noise and illumination changes.

*Step 457: Random Sampling and Binary Pattern Encoding:* In this step the local *N* × *N* block statistical characteristics are compared against the global image characteristics in order to create a local binary map using adaptive Thresholding, for example. The result of this step is passed to both Steps 458 and 459.

*Step 458: Energy Functions and Descriptor Analysis*: This step receives as inputs the outputs from Steps 454, 456 and 457 and generates from these energy functions and image descriptors together with their corresponding comparators / matchers.

*Step 459: Compute Texture Vector:* In this step the outputs of steps 457 and 458 are processed in order to establish a texture vector for each *N* × *N* block within the image.

*Step 460: Colour Texture Encoding: N* × *N* block encoding is performed, for example, using a local binary pattern mask, encoded colour values [1-11 or the number encoded] and local image texture information [N descriptors] with input from Steps 407 and 459. This encodes color and texture information per *N* × *N* block using the most descriptive texture and most dominant local color information.

*Step 461: Feature Dimensionality Reduction*: The processed data from Step 460 is processed in order to reduce computational complexity and processing time using one or more dimensionality reduction processes including, for example, PCA, Fisher Discriminant Analysis, and Linear Discriminant Analysis.

*Step 462: Feature Matrix Computation:* Within this step a data color-texture feature matrix computation is performed wherein local feature vectors are grouped for each image in a matrix format.

*Step 463: Distance Metrics:* The output from Step 462 is processed using linear distance measures / metrics and non-symmetrical measures of the difference between two probability distributions to compare two feature sets. Such processes include, for example Euclidean distance metric, Malahanobis distance metric, and Kullback-Leiblar Divergence techniques.

*Step 464: Similarity Measure and Match Score Computation*: The metrics from Step 463 are employed in order to compute a final score which may be calculated for a subset of images taken for same individual.

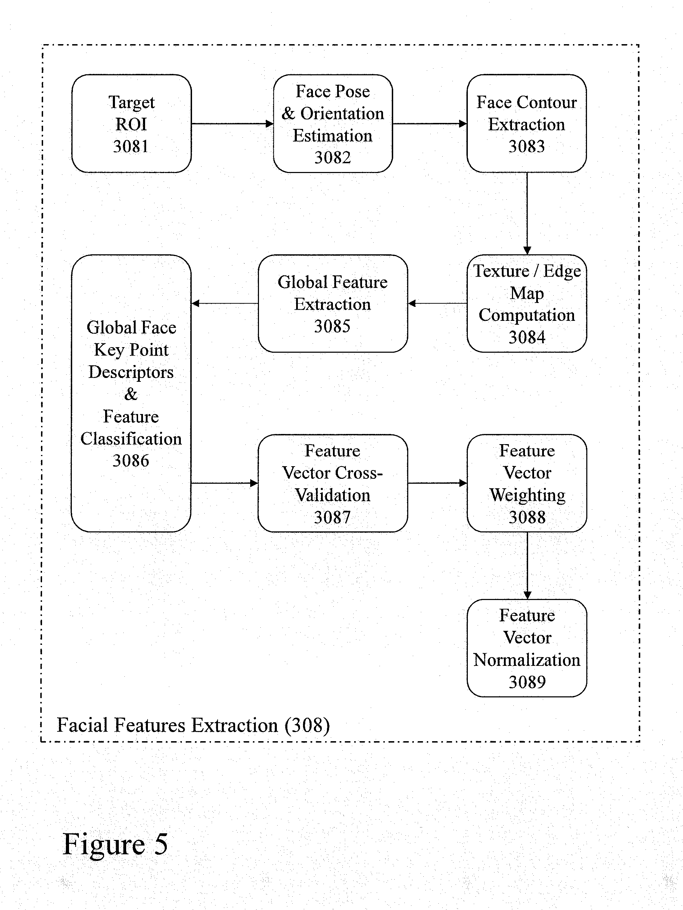

Now referring to Figure 5 there is depicted a schematic of Step 308 from Figure 3 for the Facial Features Extraction according to an embodiment of the invention. Within the steps described below several stages may exploit image and geometric processing which as described *supra* may exploit a variety of algorithms, either individually or collectively, to correct, minimize, adjust, or manipulate an aspect of the image or images acquired from the camera(s) associated with the terminal. Some examples of such algorithms have been described *supra* but others known within the art may be exploited. Similarly others steps may be implemented using one or more techniques known within the art. As depicted the steps are:

*Step 3081: Target ROI*: The extracted target region, i.e. the user's face, is acquired.

*Step 3082: Face Pose and Orientation Estimation:* Using the target region one or more features, such as for example the nose, mouth and eye detections are employed as key point locations. Based upon these an estimated angle for the facial pose is stored in conjunction with the corresponding extracted features at that specific orientation for further matching.

*Step 3083: Face Contour Extraction*: Elliptical curve fitting for example is applied to extract a facial contour. Skin-based region detectors and filters may also be employed in order to improve face boundary localization.

*Step 3084: Texture* / *Edge Map Computation:* One or more filtering technique may be applied, for example Local Binary Patterns, in order to extract edge information. Such techniques allow a reduction in the effects of lighting variability in the process. This also encodes texture information per block using the most descriptive texture and edge information in the extracted target region.

Step 3085: Global Feature Extraction: Texture Filtering using for example Gabor wavelet-based filters using *N* central frequencies and *M* different angles is applied at different scales. Whilst a variety of technique may be applied a Gabor wavelet representation of facial images may be more robust to variations arising from illumination and facial expression changes. *N* Gabor magnitude and phase response vectors are computed per facial region and are stored in a matrix format for different scales and orientations.

*Step 3086: Global Descriptors and Classification:* Facial key point descriptors and feature classifications are extracted using one or more processes, including for example a wavelet filter. As a result of this process only the most dominant feature points are kept for subsequent matching. For example, a scale-invariant feature transform (SIFT) and / or SURF-like algorithm may be used to extract the most dominant key point descriptors.

*Step 3087: Feature Vector Cross- Validation:* The extracted features from Step 3086 are compared to previously computed feature vectors enrolled into the database associated with the user. For example, feature vector may be sorted based on the most dominant feature space using a Principal Component Analysis-like method. During this step according to the process applied non-informative features and noise-based contributions may be eliminated.

*Step 3088: Feature Vector Weighting:* in this step, for example, the most dominant and discriminative feature points are assigned increased weight and are updated every time features are calculated. Features that represent occlusion or a non-face object are assigned zero weight. Features points retaining discriminative facial information are ranked accordingly.

*Step 3089: Feature Vector Normalization*: The weighted feature vectors from Step 3088 are normalized using, for example, a feature histogram distribution.

According to the present invention there is provided a transaction verification system for use in association with a terminal for performing authenticated user-initiated transactions and generating transaction data including a user identity associated with each transaction. A camera or cameras capture image data of a user performing an authenticated transaction at the terminal wherein the image data is passed to an analytics server for processing. The analytics server may be local to the terminal or remote and be analyzing real-time or offline from the authenticated user-initiated transactions. The analytics server being configured to extract user characteristic features from the image data associated with authenticated transactions and iteratively updates a user database of the user characteristic features over multiple authenticated transactions. The analytics server is further configured to compute a match score, based on preset rules, of the user characteristic features for a current transaction with the user characteristic features associated with a current user stored in the user database, and raise an alarm when the match score fails to meet a threshold value.

Embodiments of the invention thus provide a passive system that uses, for example, existing video recorders in terminals, taking the video associated with a transaction and storing it (or images extracted from it) then performing facial recognition analytics on it in the background. Embodiments of the invention thus provide for image processing which initially finds the face, extracts certain features, and stores them separately, iteratively building up a database of facial features for a particular user. However, embodiments of the invention also support the extension of these concepts into authenticated user-initiated transaction systems exploiting conventional POS systems by the simple addition of one or more cameras either into the POS terminals or to locations within the retail environment, for example, such that the user's image may be captured. Embodiments of the invention also support newer PED based systems exploiting for example smartphones or tablet computers wherein the PED provides both the means for executing the authenticated user-initiated transaction(s) but also the capturing of the user's image before or after the authenticated user-initiated transaction(s) through the use of a camera, said camera typically being integrated to the PED.

Optionally, embodiments of the invention in addition to supporting the verification and authorization of the release of financial funds in respect of a financial instrument either physically at an ATM, at a POS, or online may also be employed in controlling the release of data relating to a financial instrument including, but not limited to, credit card number, expiration date, and verification code when this information is employed in respect of goods and / or services, such as when booking a hotel for example places a pending charge to the financial instrument which may be subsequently automatically completed at departure time.

Accordingly, once a system according to an embodiment of invention determines that enough data associated with a user has been acquired then the system can trigger that a new authorization process exists for their financial transactions. This process, for example, starts when a user initiates a financial transaction at a terminal. A system according to an embodiment of the invention may then, in real time, take the video (or image(s) extracted from it), analyze certain facial features (whatever is visible) using standard methods, and compare them to the ones stored in the database. Based upon the analysis one or more authorizations and / or alarms may be triggered.

Within the embodiments of the invention described above the association between a user authenticated financial transaction and a credential provided as part of the transaction has been primarily described and presented from the viewpoint that there is a one-to-one correlation between the credential and the user, for reference a primary user. For example, a credit card, debit card, smart-tag is generally considered as being associated with a single user. However, in many instances, another individual, for example the user's mother, father, husband, wife, girlfriend, or employer, may also have been using the credential and have knowledge of any associated security credential(s) required during the transaction, e.g. a PIN. Such an individual we will refer to as a secondary user and accordingly their ability to perform financial transactions which the primary user is aware of and approves of may be compromised or halted completely once a facial recognition system according to an embodiment of the invention described *supra* is active.

Accordingly, within other embodiments of the invention a credential may be associated with two or more users by an approved authorization such as, for example, from the primary user, from a financial institution, an employer issuing a credential, etc. Accordingly, in order for this to be established it may be necessary for the primary user and / or secondary user to provide an initial set of images upon which an initial characterization process operates to establish the characteristic data to be stored in memory for subsequent extraction and modification. However, as the software processing algorithms described supra are intended to provide satisfactory processing under a wider range of conditions that those normally associated with facial recognition systems within the prior art it would be evident that the requirements for the initial training set may be different now to those within the prior art.

According, rather than requiring the primary user and / or secondary user to sit at a location such as their financial institution for this training set to be created they may for example, upload themselves a series of images acquired from multiple sources or alternatively, they may provide access or details relating to one or more social media networks wherein they may identify images to form the dataset or the system automatically accesses their social network profile and that of their friends to seek images within which the primary user and / or secondary user has been tagged. Such tagging thereby allows the system to know which individual within images containing two or more individuals should be employed. It would be further evident that the addition of a secondary user may be restricted to requiring facial recognition of the primary user in order to establish them initially or to subsequently activate a pending association of the secondary user to the credential of the primary user.

Within other embodiments of the system the issuance of a replacement credential to a user, e.g. a credit card with new expiry date, may require initial user verification by facial recognition, such as the user accessing an ATM with the new credential wherein the credential is then approved for subsequent financial transactions as the user's characteristics are now associated by amendments to the databases with the new credential rather than the old credential. Accordingly, telephone activation of a replacement credential may be replaced with a process at an ATM which is easily achieved for users thereby removing or reducing opportunities for fraud by intercepting such replacement credentials.

It would be further evident that embodiments of the invention also support online purchasing by the user at home etc. In this the online retailer's financial authorization process, where the credential has facial recognition active, now may ask the user to provide an image acquired from the PED or FED the purchasing process is being executed upon. For example, a camera within a laptop may be activated or a camera within a smartphone activated an image automatically acquired or the user is prompted to provide via the PED or FED. For example, a transaction performed upon a smartphone with a second camera upon the face the user interfaces via may automatically take an image whereas the same transaction upon a smartphone equipped with a single camera could require the user to take a photo. Accordingly, facial recognition processing may be applied to online purchasing wherein the purchaser's personal PED and / or FED is acting in essence as the retailer's POS.

The novel systems, according to embodiments of the invention, make use of several image processing algorithms, video analytics, and biometrics algorithms to extract informative and discriminative data from facial images acquired by a camera associated with a terminal and a financial transaction of the user. Such processes may include, but are not limited to:
- multi-view face and human body detection and region of interest extraction;
- image normalization (pre-processing);
- feature extraction (rotation, scale, translation, illumination invariant etc.);
- feature classification;
- feature matching using pre-enrolled feature vector and biometric templates; and
- development of a set of metrics for specific applications analysis.

In accordance with embodiments of the invention, the five steps in a standard facial recognition system are changed so that the recognition is done in a manner the inventors call passively. Namely there is no need for the acquisition of an upfront picture of a user, no need for the user to enroll, no new hardware to install in existing systems with cameras, low hardware complexity to upgrade for terminals without cameras, and the ability for the facial recognition system to operate with new emerging financial transaction systems. Additionally embodiments of the invention exploit a colour/texture encoder within one of the steps, has 1:1 biometric feature matching based on the transaction ID, and may exploit combinations of Gaussian and water-shed processes for background subtraction in step 301

Some embodiments of the invention may exploit a 100% software solution deployed centrally in the cloud with no requirements for user BIC cards used for on-site storage. Features are associated with bank transactional information and updated iteratively in time using on-line template updating, feature extraction and matching scheme. Further, image acquisition may be performed from cameras where the images are extracted at a variable frame rate due to variable bandwidth limitations.

Embodiments of the invention exploit background scene subtraction performed using an adaptive and unsupervised modeling technique. Multi-image and / or multi-view face detection is activated when motion is detected for example or when a financial transaction is initiated by the user. Foreground extraction is used to reduce processing time allowing real-time analysis to link facial recognition processing to financial transaction authorization. Face and ear feature extraction may for example be performed using a region of interest. Using an extracted mask multi-view face detection techniques as well as single-view face detections techniques may be applied. Features vectors are created, updated and optimized at every transaction, every *N^{th}* transaction, or every transaction with a terminal associated with a camera. The novel approaches within embodiments of the invention measure the dissimilarities between extracted facial features and updated feature vector(s) that correspond to the user using the ATM.

According to another aspect of the invention there is provided an analytics server for use in a transaction system comprising a terminal for performing authenticated user-initiated transactions and generating transaction data including a user identity associated with each transaction and a camera for capturing image data of a user performing an authenticated transaction at the terminal; wherein the analytics server is configured to extract user characteristic features from the image data associated with authenticated transactions and iteratively update a user database of the user characteristic features over multiple authenticated transactions, and wherein the analytics server is further configured to compute a match score, based on preset rules, of the user characteristic features for a current transaction with the user characteristic features associated with a current user stored in the user database, and raise an alarm when the match score fails to meet a threshold value.

According to a still further aspect of the invention there is provided a method of verifying transactions comprising generating transaction data including a user identity in response to an authenticated transaction performed by a user; capturing image data of a user performing an authenticated transaction at the terminal; and processing image data from the camera to extract user characteristic features from the image data associated with authenticated transactions; iteratively updating a user database of the user characteristic features over multiple authenticated transactions; computing a match score, based on preset rules, of the user characteristic features for a current transaction with the user characteristic features associated with a current user stored in the user database, and raising an alarm when the match score fails to meet a threshold value.

Accordingly, it would be evident that embodiments of the invention provide benefits to financial institutions as well as users. For example it would beneficial for financial institutions, as well as others exploiting facial recognition techniques for applications such as access control, security, etc. to exploit a system that automatically processed image data obtained from image sources associated with multiple authenticated transactions by an individual in order to extract user characteristic features from this set of image data associated with authenticated transactions and iteratively updated user data, for example within a user database, based upon these extracted user characteristic features associated with the multiple authenticated transactions. It would be further beneficial for additional processing to allow analytics to be performed to compute a match score, based upon preset rules, of the user characteristic features for a current transaction being performed. Failure of a match score to meet a predetermined condition may for example result in the transaction being flagged as suspect or stopped altogether.

It would be further beneficial if such facial recognition techniques allowed multiple users to be associated with a debit card / credit card either automatically or at the direction of the first user associated with it. It would be evident that such facial recognition techniques would allow for preemptive action(s) to be performed as a result of a transaction being initiated or completed. Beneficially, embodiments of the invention further support the provisioning of such security and fraud detection techniques to new evolving POS solutions, such as Square™ and ROAM card swipers which connect directly to a smartphone or card.io card scanning. For example, a user may make a financial transaction in a field during a festival using a Square™ card swiper attached to an Apple™ iPhone where the camera within the Apple™ iPhone captures the image of the user and the cellular connection provides connection to a Passive Analytics Server in a manner similar to that described in respect of Figure 1.

It be further evident that whilst the description *supra* has been described in respect of financial transactions that embodiments of the invention may be employed in other applications including, but not limited to, cellphone access, computer terminal access, security systems, access control, etc. either discretely or in combination with other biometric systems.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above and/or a combination thereof.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages and/or any combination thereof. When implemented in software, firmware, middleware, scripting language and/or microcode, the program code or code segments to perform the necessary tasks may be stored in a machine readable medium, such as a storage medium. A code segment or machine-executable instruction may represent a procedure, a function, a subprogram, a program, a routine, a subroutine, a module, a software package, a script, a class, or any combination of instructions, data structures and/or program statements. A code segment may be coupled to another code segment or a hardware circuit by passing and/or receiving information, data, arguments, parameters and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory. Memory may be implemented within the processor or external to the processor and may vary in implementation where the memory is employed in storing software codes for subsequent execution to that when the memory is employed in executing the software codes. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels and/or various other mediums capable of storing, containing or carrying instruction(s) and/or data.

The methodologies described herein are, in one or more embodiments, performable by a machine which includes one or more processors that accept code segments containing instructions. For any of the methods described herein, when the instructions are executed by the machine, the machine performs the method. Any machine capable of executing a set of instructions (sequential or otherwise) that specify actions to be taken by that machine are included. Thus, a typical machine may be exemplified by a typical processing system that includes one or more processors. Each processor may include one or more of a CPU, a graphics-processing unit, and a programmable DSP unit. The processing system further may include a memory subsystem including main RAM and/or a static RAM, and/or ROM. A bus subsystem may be included for communicating between the components. If the processing system requires a display, such a display may be included, e.g., a liquid crystal display (LCD). If manual data entry is required, the processing system also includes an input device such as one or more of an alphanumeric input unit such as a keyboard, a pointing control device such as a mouse, and so forth.

The memory includes machine-readable code segments (e.g. software or software code) including instructions for performing, when executed by the processing system, one of more of the methods described herein. The software may reside entirely in the memory, or may also reside, completely or at least partially, within the RAM and/or within the processor during execution thereof by the computer system. Thus, the memory and the processor also constitute a system comprising machine-readable code.

In alternative embodiments, the machine operates as a standalone device or may be connected, e.g., networked to other machines, in a networked deployment, the machine may operate in the capacity of a server or a client machine in server-client network environment, or as a peer machine in a peer-to-peer or distributed network environment. The machine may be, for example, a computer, a server, a cluster of servers, a cluster of computers, a web appliance, a distributed computing environment, a cloud computing environment, or any machine capable of executing a set of instructions (sequential or otherwise) that specify actions to be taken by that machine. The term "machine" may also be taken to include any collection of machines that individually or jointly execute a set (or multiple sets) of instructions to perform any one or more of the methodologies discussed herein.

The foregoing disclosure of the exemplary embodiments of the present invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto, and by their equivalents.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the scope of the present invention.

## Claims

1. A system comprising:
a terminal for performing an authenticated user-initiated transaction by a current user and generating transaction data including a user identity generated in association with the authenticated user-initiated transaction;
a camera for capturing image data of a user performing an authenticated transaction at the terminal;
an analytics server connected to the terminal via network, the analytics server comprising at least a processing circuit for processing image data from the camera, the analytics server being configured to:
extract user characteristic features from the image data associated with authenticated transactions;
iteratively update a user database of the user characteristic features over multiple authenticated transactions;
computing with the processing circuit a match score based upon preset rules for the user characteristic features relating to a current user performing a current transaction with the user characteristic features associated with an authenticated user, the authenticated user being established in dependence upon the user identity; and
determining whether to raise an alarm when the match score fails to meet a threshold value.

2. The system according to claim 1, wherein the analytics server is further configured to at least one of:
create and update the user characteristic features after every *N* authenticated user-initiated transactions where the match score meets the threshold value, where *N* is a positive integer;
process the user characteristic features in real time and update the user database when the match score meets the threshold value;
process the user characteristic features as a background process by matching the time of authenticated transactions with the time of the captured image data; and
send an alarm to an alarm reporter module in the event of the match score failing to reach meet the threshold value.

3. The system according to claim 1, wherein the camera is one camera of a plurality of cameras, each camera connected to the analytics server via the network and at least one of associated with the terminal and capturing images of an area within which the terminal is located.

4. The system according to claim 1, wherein computing the match score comprises selecting a user match score of a plurality of user match scores, each user match score being generated by applying a predetermined sequence of image processing algorithms on the image data to establish current user characteristic features and applying a predetermined set of rules to the current user characteristic features and a set of user characteristic features associated with an individual associated with a financial instrument employed within the authenticated user-initiated transaction.

5. The system according to claim 1, wherein an initial set of user characteristic features are established within the user database for a user based upon the system being provided a training set of images selected by at least one of the user themselves and the system itself based upon accessing one or more social networks relating to at least one of the user and a friend of the user.

6. The system according to claim 1, wherein the terminal comprises at least an electronic device and a software application installed upon a the electronic device; and the camera is part of the electronic device and allows either acquisition of the image data automatically during the authenticated user-initiated transaction or as a discrete step within the authenticated user-initiated transaction.

7. A system comprising:
an analytics server for connecting to a network comprising at least a processing circuit, the analytics server being configured to:
receive image data from a camera connected to the network for capturing image data of a user performing an authenticated transaction at a terminal also connected to the network;
receive transaction data from the terminal, the transaction data including a user identity generated in association with the authenticated user-initiated transaction performed by a current user;
extract user characteristic features from the image data associated with authenticated transactions;
iteratively update a user database of the user characteristic features over multiple authenticated transactions;
compute with the processing circuit a match score based upon preset rules for the user characteristic features relating to a current user performing a current transaction with the user characteristic features associated with an authenticated user, the authenticated user being established in dependence upon the user identity; and
determining whether to raise an alarm when the match score fails to meet a threshold value.

8. The system according to claim 7, wherein the analytics server is further configured to at least one of:
create and update the user characteristic features after every *N* authenticated user-initiated transactions where the match score meets the threshold value, where *N* is a positive integer;
process the user characteristic features in real time and update the user database when the match score meets the threshold value;
process the user characteristic features as a background process by matching the time of authenticated transactions with the time of the captured image data; and
send an alarm to an alarm reporter module in the event of the match score failing to reach meet the threshold value.

9. The system according to claim 7, wherein computing the match score comprises selecting a user match score of a plurality of user match scores, each user match score being generated by applying a predetermined sequence of image processing algorithms on the image data to establish current user characteristic features and applying a predetermined set of rules to the current user characteristic features and a set of user characteristic features associated with an individual associated with a financial instrument employed within the authenticated user-initiated transaction.

10. The system according to claim 7, wherein an initial set of user characteristic features are established within the user database for a user based upon the system being provided a training set of images selected by at least one of the user themselves and the system itself based upon accessing one or more social networks relating to at least one of the user and a friend of the user.

11. A method comprising:
receiving at a server comprising at least a processing circuit image data from a camera connected to a network, the captured image data relating to a current user performing an authenticated transaction at a terminal also connected to the network;
receiving at the server transaction data from the terminal, the transaction data including a user identity generated in association with the authenticated user-initiated transaction performed by the current user;
extracting with the processing circuit user characteristic features from the image data associated with authenticated transaction;
iteratively updating with the processing circuit a user database of the user characteristic features over multiple authenticated transactions;
computing with the processing circuit a match score based upon preset rules for the user characteristic features relating to a current user performing a current transaction with the user characteristic features associated with an authenticated user, the authenticated user being established in dependence upon the user identity; and
determining with the processing circuit whether to raise an alarm when the match score fails to meet a threshold value.

12. The method according to claim 11, wherein at least one of:
the camera is a camera of a plurality of cameras, each camera connected to the network and at least one of associated with the terminal and capturing images of an area within which the terminal is located; and
the terminal comprises at least an electronic device and a software application installed upon the electronic device; and
the camera is part of the electronic device and allows either acquisition of the image data automatically during the authenticated user-initiated transaction or as a discrete step within the authenticated user-initiated transaction.

13. A method comprising associating with a financial instrument a set of user characteristic features, the set of user characteristic features forming part of a user database stored within a non-volatile non-transitory physical memory and derived by extracting user characteristic features from image data captured in association with a plurality of authenticated user-initiated transactions employing the financial instrument, wherein the user database is iteratively updated with the user characteristic features over multiple authenticated transactions.

14. A method comprising determining whether to authorize release of at least one of financial funds with and data relating to a financial instrument in dependence upon at least whether a match score meets a threshold value, the match score being established by applying with a processing circuit preset rules to user characteristic features relating to a current user performing a current financial transaction in respect of the release of financial funds in relation to the financial instrument with user characteristic features associated with an authenticated user of the financial instrument; wherein the user characteristic features of the authenticated user have been established by extracting user characteristic features from image data associated with a plurality of previous authenticated transactions and iteratively updating a user database of the user characteristic features over the plurality of previous authenticated transactions.

15. A method comprising determining whether to generate at least one notification of a plurality of notifications, each notification being generated upon whether a match score exceeds a predetermined threshold value associated with the notification, wherein the match score is established by applying with a processing circuit preset rules to user characteristic features relating to a current user performing a current financial transaction relating to a financial instrument with user characteristic features associated with an authenticated user of the financial instrument and the user characteristic features of the authenticated user have been established by extracting user characteristic features from image data associated with a plurality of previous authenticated transactions and iteratively updating a user database of the user characteristic features over the plurality of previous authenticated transactions.
